# EUROPÄISCHE PATENTSCHRIFT

(11) **EP 3 623 032 B1**
(45) Veröffentlichungstag und Bekanntmachung des Hinweises auf die Patenterteilung: **03.01.2024**
(21) Anmeldenummer: 19197762.8
(22) Anmeldetag: 17.09.2019
(51) Int. Cl.: B01D 46/00, B01D 46/04, B01D 46/42, B01D 46/44

(54) **FILTERSYSTEM MIT DIREKTER REINIGUNGSLUFTEINSPRITZUNG SOWIE VERFAHREN ZUM ABREINIGEN**
FILTER SYSTEM WITH DIRECT CLEANING AIR INJECTION AND METHOD FOR CLEANING
SYSTÈME DE FILTRAGE À INJECTION DIRECTE D'AIR DE NETTOYAGE AINSI QUE PROCÉDÉ DE NETTOYAGE

(30) Priorität: 17.09.2018 DE 102018122641
(43) Veröffentlichungstag der Anmeldung: 18.03.2020
(73) Patentinhaber: Camfil APC GmbH, 78532 Tuttlingen (DE)
(72) Erfinder: HANDTE, Dr. Jakob, 78532 Tuttlingen (DE)
(74) Vertreter: Winter, Brandl - Partnerschaft mbB

(56) Entgegenhaltungen:
- US-A1- 2010 275 776
- US-A1- 2013 255 485
- US-A1- 2015 202 558
- US-B1- 6 302 931

## Beschreibung

Die Erfindung betrifft ein Filtersystem zum Reinigen eines Rohgasstroms in einer Fertigungsanlage gemäß dem Oberbegriff des Anspruchs 1, mit zumindest einer Filterpatrone, die einerseits zum Filtern eines Rohgasstroms in einer Filterrichtung ausgelegt ist und andererseits vorbereitet ist, um durch einen Reinigungsstrom entgegen der Filterrichtung abgereinigt zu werden, und mit einem Tank, der ausgelegt ist, um die für den Reinigungsstrom vorgesehene druckbeaufschlagte Reinigungsluft vorzuhalten. Weiterhin betrifft die Erfindung ein Verfahren zum Abreinigen einer Filterpatrone eines solchen Filtersystems.

Aus dem Stand der Technik sind bereits Filtersysteme mit Filterpatronen sowie Verfahren zur Abreinigung der Filterpatronen bekannt. Zum Beispiel offenbart die DE 10 2014 006 473 A1 eine Filtervorrichtung mit einem Gehäuse, in dem wenigstens ein Filterelement untergebracht ist, das einen von einem Filtermaterial umgebenen Innenraum aufweist und das von einem Rohgas von außen nach innen durchströmt wird, und mit einer Reinigungsvorrichtung, die wenigstens eine Druckluftleitung aufweist, aus deren Auslassöffnung das Filterelement von innen beaufschlagende Druckluft strömt, wobei der Innenraum des Filterelementes in wenigstens zwei voneinander getrennte Innenraumbereiche unterteilt ist, und dass jedem Innenraumbereich wenigstens eine Druckluftleitung zugeordnet ist, in der jeweils ein Ventil sitzt. Auch offenbart die DE 10 2014 006 473 A1 ein Verfahren zur Reinigung wenigstens eines Filterelementes unter Verwendung einer Filtervorrichtung, bei dem ein Druckluftstrom durch das Filtermaterial entgegen der Strömungsrichtung des zu filternden Rohgases geleitet wird, wobei die Filterfläche abschnittsweise nacheinander mit Druckluft beaufschlagt wird.

Ein gattungsgemäßes Filtersystem also weist zumindest eine Filterpatrone, vorzugsweise mehrere Filterpatronen, auf. Die Filterpatronen sind beispielsweise in einem Gehäuse des Filtersystems so angeordnet, dass ein Filtermaterial der Filterpatronen von einem zu filternden Rohgas durchströmt wird. Das Rohgas durchströmt die Filterpatronen zur Reinigung also in einer Durchströmungsrichtung bzw. Strömungsrichtung, die auch als eine Filterrichtung bezeichnet wird. In einer bevorzugten Ausführungsform wird die vorzugsweise zylinderförmig ausgebildete Filterpatrone von außen nach innen durchströmt. Das heißt also, dass die Filterrichtung von radial außen durch eine durch Filtermaterial gebildete Filterwand der Filterpatrone ins Innere der Filterpatrone führt. Bei der Reinigung des Rohgases lagern sich die aus dem Rohgasstrom herausgefilterten Partikel an dem Filtermaterial der Filterpatrone ab. Um diese Partikel von dem Filtermaterial der Filterpatrone zu entfernen, wird das Filtermaterial mit einem Reinigungsstrom aus (Druck-) Luft bzw. Reinigungsluft entgegen der Filterrichtung, d.h. von innen nach außen, beaufschlagt. Dies wird als ein Abreinigen der Filterpatrone bezeichnet.

Das gattungsgemäße Filtersystem weist einen Tank auf, der ausgelegt ist, um die für den Reinigungsstrom vorgesehene druckbeaufschlagte Reinigungsluft vorzuhalten. Der Tank speichert also druckbeaufschlagte Luft, d.h. Druckluft, bzw. Reinigungsluft, welche von dem Tank als Reinigungsstrom abgegeben wird und der Filterpatrone zugeführt wird. Dabei wird der Reinigungsstrom entgegen der Filterrichtung der Filterpatrone zugeführt.

Ein solches Filtersystem ist beispielsweise auch aus der US 2015/202558 A1, der US 2013/255485 A1, der US 2010/275776 A1 oder der US 6,302,931 B1 bekannt. Weiterer gattungsgemäßer Stand der Technik ist aus der EP 1 628 737 A1 und der CH 689 632 A5 bekannt.

Der Stand der Technik hat jedoch immer den Nachteil, dass der Tank, der die Druckluft speichert, oftmals von den Filterpatronen entfernt angeordnet ist und über eine Druckluftzuleitung, die üblicherweise als Blowpipe bezeichnet wird, die Druckluft zu Düsen führt, die die Druckluft ausstoßen, um die Filterpatronen mit dem Reinigungsstrom zu beaufschlagen. Die Druckluftzuleitung ist jedoch so ausgebildet, dass eine Geschwindigkeitserhöhung durch eine Einengung des Querschnitts in der Druckluftzuleitung aufgrund des konstanten Massenflusses im Strömungsverlauf der Druckluft zu einer Verminderung des Drucks führt (vergleiche Bernoulli-Gleichung). Mit anderen Worten wird durch den relativ zu dem Tank verringerten (Durchströmungs-) Querschnitt der Druckluftleitung eine Geschwindigkeit des Druckluftstroms gesteigert. Da ein Massenfluss im Strömungsverlauf nach der Bernoulli-Gleichung immer konstant ist, wird durch die Geschwindigkeitssteigerung der Druckluft folglich der Druck der Druckluft herabgesetzt. Durch das Einsetzen einer Druckluftzuleitung entstehen also erhebliche Druckverluste zwischen dem Tank und der Düse. Als Folge dessen muss im Tank ein (erheblich) höherer Druck aufgebracht werden als zur Abreinigung notwendig ist, da nur ein Teil des Drucks die Filterpatrone erreicht. Dadurch sind nachteiligerweise zum einen die Kosten für die Abreinigung verhältnismäßig hoch und zum anderen die Höhe des Drucks zum Beaufschlagen der Filterpatrone stark begrenzt.

Es ist also die Aufgabe der Erfindung, die Nachteile aus dem Stand der Technik zu vermeiden oder wenigstens zu verringern. Insbesondere sollen ein Filtersystem sowie ein Verfahren zum Abreinigen einer Filterpatrone bereitgestellt werden, bei der eine Abreinigung der Filterpatronen besonders kostengünstig, insbesondere mit verringerten Kosten für Druckluft, durchgeführt werden kann, und eine Standzeit der Filterpatrone erhöht wird.

Die Aufgabe der Erfindung wird erfindungsgemäß durch ein Filtersystem gemäß Anspruch 1 gelöst. Demnach ist wenigstens eine Düse im Tank so angeordnet ist, dass die Reinigungsluft der Filterpatrone direkt zuführbar ist. Mit anderen Worten ist die Düse so an ein Tankvolumen angeschlossen, dass die Druckluft ohne eine Druckluftzuleitung zum Abreinigen der Filterpatronen ausgestoßen werden kann. Das heißt also, dass die Düse unmittelbar, insbesondere ohne querschnittsverengende Leitungen, von dem Tank mit Druckluft versorgt wird. Die Düse ist also so an dem Tank angeschlossen, dass die Druckluft ohne Druckverluste zum Abreinigen an die Filterpatrone abgegeben wird. Das heißt also auch, dass die Druckluft mit einer konstanten Geschwindigkeit von dem Tank zu der Düse, an der sie ausgestoßen wird, geführt wird.

Dabei enthält das Filtersystem eine Steuerung, die vorbereitet ist, um in Abhängigkeit eines Differenzdrucks zwischen dem Inneren und dem Äußeren der Filterpatrone und/oder in einem festgelegten Zeitintervall einen Ausstoß der Reinigungsluft aus dem Tank zu erzwingen. Zum Erfassen des Differenzdrucks kann vorzugsweise eine Messeinrichtung vorhanden sein, die einen Druck im Inneren der Filterpatrone und einen Druck (direkt) außerhalb der Filterpatrone erfasst. Dieser Differenzdruck gibt Aufschluss darüber, wie viel herausgefilterte Partikel in dem Filtermaterial der Filterpatrone festsitzen. Die Druckdifferenz gibt also Aufschluss über eine Verschmutzung der Filterpatrone. Ist die Druckdifferenz hoch, ist die Filterleistung demnach verhältnismäßig gering. Insbesondere wird also eine Filterpatrone bei zunehmender Verschmutzung häufiger abgereinigt.

Dies hat den Vorteil, dass zwischen dem Tank und der Düse keine Druckverluste entstehen, so dass ein Vordruck im Tank reduziert werden kann, aber gleichzeitig ein Druckluftstoß mit ausreichend hohem Druck an der Filterpatrone ankommt. Dadurch kann vorteilhafterweise ein Druckluftverbrauch gesenkt werden, was die Kosten zum Abreinigen erheblich reduziert. Zudem kann die Reinigungsluft durch die bedarfsgerechte Steuerung des Reinigungsluft besonders effizient und filterpatronenschonend zugeführt werden.

Zudem ist eine Anordnung des Tanks und der Filterpatrone zueinander so gewählt, dass eine blowpipefreie direkte Lufteinspritzung aus dem Tank durch die Düse auf die Filterpatrone oder in die Filterpatrone hinein erzwungen ist. Dadurch lässt sich zum einen der Druck, mit dem die Filterpatrone abgereinigt wird, gezielt steuern. Zum anderen lassen sich dadurch zum anderen Druckverluste und somit Kosten einsparen. Weiterhin kann die Filterpatrone so mit einem höheren Druck beaufschlagt werden, so dass die Filterpatrone bei der Abreinigung näher an ihren Ursprungszustand gebracht werden kann, was sich günstig auf eine Standzeit und/oder eine Filterleistung der Filterpatrone auswirken kann. Der Tank ist damit so nah zu der Filterpatrone angeordnet, dass auf eine Blowpipe/Druckluftzuleitung, d.h. auf eine Querschnittsverengung zwischen dem Tank und der Düse, verzichtet werden kann.

Zusätzlich ist die Steuerung so eingerichtet, dass ein Vordruck des Tanks in Abhängigkeit eines Zeitintervalls zwischen aufeinanderfolgenden Ausstößen von Reinigungsluft verändert wird. Dadurch kann der Vordruck also an den Grad der Verschmutzung der Filterpatronen angepasst werden. Somit kann die Abreinigung der Filterpatrone so gesteuert werden, dass sie bei größerer Verschmutzung mit höherem Druck abgereinigt wird, so dass sie näher an ihren Urzustand gebracht wird.

Ferner ist eine Druckerzeugungsvorrichtung an dem Tank angeschlossen, die zum Erzeugen eines Vordrucks von 3 bis 7 bar im Tank eingerichtet ist.

Vorteilhafte Ausführungsformen sind in den Unteransprüchen beansprucht und werden nachfolgend näher erläutert.

Ferner ist es vorteilhaft, wenn der Tank und/oder die Düse oberhalb der Filterpatrone angeordnet sind/ist. Dabei wird unter oberhalb verstanden, dass der Tank in einer Richtung entlang der Längsachsen der Filterpatronen angeordnet ist. Insbesondere ist der Tank einer Auslassöffnung der Filterpatronen, an denen ein gefiltertes Rohgas aus den Filterpatronen ausströmt, gegenüberliegend angeordnet. Sind die Filterpatronen vertikal angeordnet, d.h. ihre Längsachse ist in Vertikalrichtung angeordnet, ist der Tank also in Schwerkraftrichtung (in der Vertikalrichtung) oberhalb der Filterpatronen angeordnet. Der Tank ist also an der Stelle angeordnet, von der aus die Reinigungsluft zur Filterpatrone hin abgegeben wird. Vorzugsweise ist der Tank also innerhalb des Gehäuses des Filtersystems eingebaut.

In einer bevorzugten Ausführungsform kann das Filtersystem eine einer Anzahl an Filterpatronen entsprechende Anzahl an Düsen aufweisen, wobei die Düsen jeweils einer Filterpatrone zugeordnet sind. Jede Düse ist also einer Filterpatrone zugeordnet und beaufschlagt diese mit Reinigungsluft. So kann die Reinigungsluft gezielt jeder Filterpatrone zugeführt werden. Es ist bevorzugt, wenn die Düsen an einen gemeinsamen Tank angeschlossen sind, da die Filterpatronen dadurch gleichzeitig beaufschlagt werden können, was eine Dauer der Abreinigung verkürzt.

Zudem ist es zweckmäßig, wenn eine Form und/oder eine Ausrichtung der Düse so gestaltet ist und/oder ein Abstand zwischen der Düse und einer der Düse zugeordneten Filterpatrone so gewählt ist und/oder die Position des Tanks relativ zu der Filterpatrone so gewählt ist, dass ein Tankinnendruck des Tanks im Wesentlichen, d.h. maximal ± 10%, bevorzugt maximal ± 5%, einem Innendruck der Filterpatrone entspricht. Das heißt also, dass von dem Tank zu der Filterpatrone hin nur geringfügige Druckverluste entstehen. Dadurch kann also ein Tankinnendruck verhältnismäßig gering gehalten werden. So kann also ein Vordruck des Tanks reduziert werden.

Außerdem ist es vorteilhaft, wenn die Steuerung so eingerichtet ist, dass der Vordruck des Tanks über eine Betriebsdauer der Filterpatrone gesehen schrittweise oder kontinuierlich verändert, insbesondere erhöht, wird. Beispielsweise kann der Vordruck in 0,5-bar-Schritten oder in 1-bar-Schritten erhöht werden. Durch einen höheren Vordruck wird auch der Tankinnendruck bzw. Druck im Tank höher, so dass der Druck der Reinigungsluft gesteigert wird. Dadurch lässt sich die Filterpatrone intensiver abreinigen.

Auch ist es von Vorteil, wenn ein Filtermaterial der Filterpatrone so gewählt ist, dass wenigstens bis zu 7 bar auf die Filterpatrone einbringbar sind. Dadurch lässt sich die Filterpatrone also mit einem Druck von bis zu 7 bar beaufschlagen, so dass ein besonders gutes Abreinigungsergebnis erzielt werden kann.

Die Aufgabe der Erfindung wird auch durch ein Verfahren zum Abreinigen einer Filterpatrone, insbesondere eines erfindungsgemäßen Filtersystems, wobei Druckluft aus dem Tank direkt in die Filterpatrone eingeleitet wird, gelöst. Dabei heißt direkt eingeleitet, dass die Druckluft ohne Zwischenschaltung einer Leitung/ Blowpipe/Druckluftzuleitung von dem Tank über die Düse zu der Filterpatrone geführt wird. Die Reinigungsluft wird also direkt aus dem Tank in die Filterpatrone eingeblasen.

Mit anderen Worten betrifft die Erfindung ein Filtersystem, bei dem die Druckluft zum Abreinigen direkt aus dem Tank ohne eine Blowpipe auf die Filterpatronen aufgebracht wird. Somit kann ein Druckluftstoß bis zu einem Druck von 7 bar erhöht werden. Der Druck wird dabei in Abhängigkeit eines Differenzdrucks zwischen einem Inneren und einem Äußeren der Filterpatrone gesteuert, so dass die Steuerung des Filtersystems sich selbst in ein energetisches Optimum reguliert. Dadurch erhöht sich eine Standzeit/Lebensdauer der Filterpatrone und Energie für die Druckluft wird eingespart. Die Filterpatrone kann also bedarfsgerecht abgereinigt werden, indem der Vordruck im Tank angepasst wird. Durch die direkte Lufteinspritzung aus dem Tank in die Filterpatrone bietet sich ein höherer Spielraum beim Druck.

Die Erfindung wird nachfolgend mit Hilfe von Zeichnungen erläutert. Es zeigen:
Fig. 1 eine schematische Darstellung eines erfindungsgemäßen Filtersystems,
Fig. 2 einen Graph, der einen Differenzdruck in Abhängigkeit der Zeit darstellt, wobei bei Erreichen eines vorbestimmten Differenzdrucks Reinigungsluft ausgestoßen wird,
Fig. 3 einen Graph, der eine Abhängigkeit zwischen einem Zeitintervall zwischen aufeinanderfolgenden Ausstößen von Reinigungsluft und einem eingestellten Vordruck in einem Tank des Filtersystems darstellt, und
Fig. 4 einen Graph, der eine Erhöhung des Vordrucks in Abhängigkeit einer Betriebszeit darstellt.

Die Figuren sind lediglich schematischer Natur und dienen ausschließlich dem Verständnis der Erfindung. Die gleichen Elemente sind mit denselben Bezugszeichen gekennzeichnet.

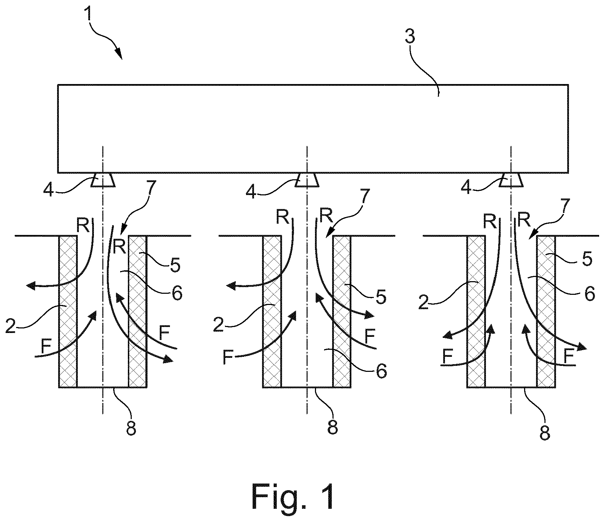

Fig. 1 zeigt ein Filtersystem 1 zum Reinigen eines Rohgasstroms in einer Fertigungsanlage. Das Filtersystem 1 weist zumindest eine Filterpatrone 2 auf, die einerseits zum Filtern eines Rohgasstroms in einer Filterrichtung F ausgelegt ist und andererseits vorbereitet ist, um durch einen Reinigungsstrom R entgegen der Filterrichtung F abgereinigt zu werden. In dem dargestellten Ausführungsbeispiel sind drei Filterpatronen 2 in dem Filtersystem 1 vorhanden. Das Filtersystem 1 weist auch einen Tank 3 auf, der ausgelegt ist, um die für den Reinigungsstrom R vorgesehene druckbeaufschlagte Reinigungsluft vorzuhalten. In dem Tank 3 ist wenigstens eine Düse 4 vorhanden, durch die die druckbeaufschlagte Reinigungsluft aus dem Tank 3 ausgestoßen werden kann. Erfindungsgemäß ist die Düse 4 im Tank 3 so angeordnet, dass die Reinigungsluft der Filterpatrone 2 direkt zugeführt werden kann. In dem dargestellten Ausführungsbeispiel sind auch drei Düsen 4 vorhanden, die jeweils einer der Filterpatronen 2 zugeordnet ist, um diese mit Druckluft zu beaufschlagen.

Die Filterpatronen 2 weisen eine Zylinderform auf, wobei eine zylinderförmige Filterwand 5 aus Filtermaterial einen Hohlraum 6 in Radialrichtung umgibt/umschließt. Zum Filtern wird die Filterwand 5 in der Filterrichtung F von außen nach innen von dem zu reinigenden Rohgasstrom durchströmt. Der Hohlraum 6 mündet an seiner Auslassöffnung 7 in eine nicht dargestellte Reingaskammer. Ein Boden 8 der Filterpatronen 2 ist luftundurchlässig ausgebildet. Wenn der zu reinigende Rohgasstrom durch das Filtermaterial der Filterpatronen 2 strömt, bleiben Partikel des Rohgasstroms an dem Filtermaterial der Filterpatronen 2, so dass der Rohgasstrom gereinigt wird und zu einem Reingasstrom wird. Durch die herausgefilterten Partikel setzt sich das Filtermaterial der Filterpatrone 2 zu, so dass eine Abreinigung der Filterpatrone 2 notwendig ist.

Zum Abreinigen der Filterpatrone 2 wird das Filtermaterial der Filterpatrone 2 entgegen der Filterrichtung F mit einem Reinigungsstrom R beaufschlagt. Dazu wird druckbeaufschlagte Reinigungsluft durch die Auslassöffnung 7 der Filterpatrone 2 in die Filterpatrone 2 eingeleitet, so dass das Filtermaterial der Filterpatrone 2 von innen nach außen durchströmt wird. Dadurch lösen sich die Partikel von dem Filtermaterial der Filterpatrone 2. Je höher der Druck des Reinigungsstroms R ist, desto besser ist die Abreinigungsleistung. Jedoch verringert ein erhöhter Druck auch die Standzeit der Filterpatrone 2.

In dem dargestellten Ausführungsbeispiel sind die Düsen 4 sowie der Tank 3 direkt oberhalb der Filterpatronen 2 angeordnet. Der Tank 3 ist also in Längsrichtung der Filterpatronen 2, die beispielsweise einer Schwerkraftrichtung entspricht, direkt gegenüber der Auslassöffnungen 7 der Filterpatronen 2 angeordnet. Die Düsen 4 sind dabei in dem Tank 3 integriert bzw. direkt an den Tank 3 angeschlossen, insbesondere ohne eine Querschnittsverengung wie durch eine Druckluftzuleitung/"Blowpipe" mit dem Tank 3 verbunden. Die Reinigungsluft, die in dem Tank 3 gespeichert und/oder erzeugt wird, kann also den Filterpatronen 2 direkt zugeführt werden. Es ist also eine direkte Reinigungslufteinspritzung durch die Anordnung des Tanks 3 und der Düsen 4 realisiert.

In dem Tank 3 ist eine nicht dargestellte Steuerung enthalten, die einen Ausstoß der Reinigungsluft aus den Düsen 4 zur Abreinigung der Filterpatronen 2 erzwingt bzw. steuert.

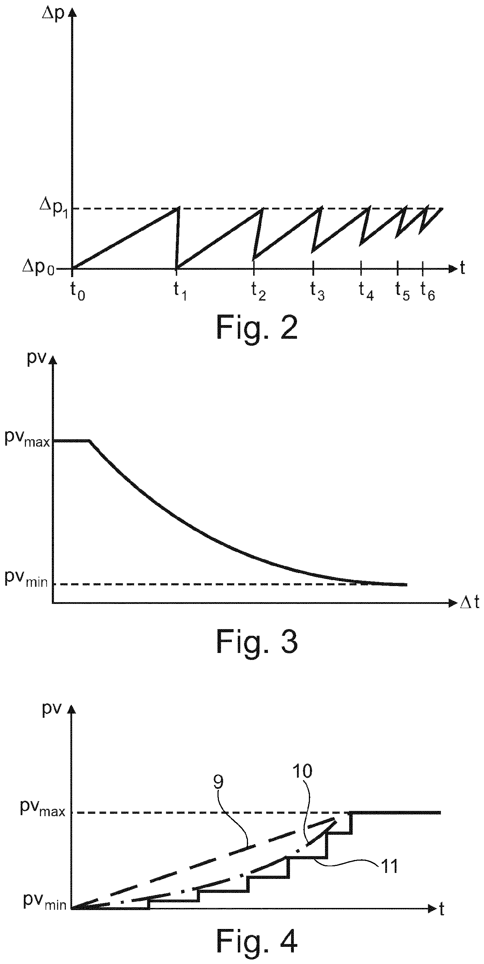

Fig. 2 zeigt einen Graphen zur Veranschaulichung einer Funktionsweise der Steuerung zur Abreinigung der Filterpatronen 2. In der Steuerung wird eine Druckdifferenz Δp zwischen einem Druck innerhalb der Filterpatrone 2 und einem Druck außerhalb der Filterpatrone 2 als Parameter verwendet. Die Drücke innerhalb und außerhalb der Filterpatrone 2 werden dazu durch eine nicht dargestellte Druckmesseinrichtung erfasst. Auf der Abszisse ist die Betriebsdauer/Betriebszeit t und auf der Ordinate ist die Druckdifferenz Δp beschrieben. Überschreitet die Druckdifferenz Δp eine festgelegte Grenzdruckdifferenz Δpₗᵢₘ wird ein Ausstoß von Reinigungsluft verursacht, d.h. ein Reinigungsluftstrom R ausgestoßen. Der Zeitpunkt des Ausstoßens wird in dem Graph als t₁ bis t₆ bezeichnet. Durch den Ausstoß der Reinigungsluft wird die Druckdifferenz Δp gesenkt, wobei ein Ursprungsdifferenzdruck Δp₀, der bei einem Betriebsstart t₀ vorliegt, nicht erreicht wird, da das Filtermaterial der Filterpatronen 2 nicht vollständig abgereinigt werden kann. Mit zunehmender Betriebszeit t wird ein Zeitintervall Δt zwischen aufeinanderfolgenden Ausstoßzeitpunkten t₁ bis t₆ immer geringer, d.h. t₂ - t₁ > t₃ - t₂, t₃ - t₂ > t₄ - t₃, usw. Auch wird eine Reduzierung des Differenzdrucks mit zunehmender Betriebszeit t immer geringer, d.h. Δpₗᵢₘ - Δp(t₁) > Δpₗᵢₘ - Δp(t₂), bzw. wird ein durch den Reinigungsstromausstoß hergestellter Differenzdruck Δp immer höher Δp(t₁) < Δp(t₂). Das Reinigungsergebnis wird also mit zunehmender Betriebszeit t schlechter.

Um dem in Fig. 2 dargestellten Effekt entgegenzuwirken, sieht die Steuerung vor, dass ein Vordruck pᵥ in dem Tank 4 in Abhängigkeit des Differenzdrucks Δp bzw. in Abhängigkeit des Zeitintervall Δt gesteuert bzw. verändert wird. In Fig. 3 stellt einen Graph zur Veranschaulichung der Funktionsweise der Steuerung dar. Je kleiner das Zeitintervall Δt wird, desto höher wird ein eingestellter Vordruck pᵥ, bis ein maximaler Vordruck pᵥₘₐₓ erreicht wird. Der Vordruck pᵥ kann beispielsweise zwischen 3 bar (pᵥₘᵢₙ) und 7 bar (pᵥₘₐₓ) eingestellt werden. Der Druck im Tank 3 wird über eine am Tank 3 angeschlossene, nicht dargestellte Druckerzeugungsvorrichtung erzeugt und im Tank 3 gespeichert.

Fig. 4 zeigt eine Veränderung des Vordrucks pᵥ über die Betriebszeit t gesehen. Der Vordruck pᵥ kann kontinuierlich linear (vergleiche Fig. 4, gestrichelte Linie 9), kontinuierlich exponentiell (vergleiche Fig. 4, Strich-Punktlinie 10) oder schrittweise (vergleiche Fig. 4, durchgezogene Linie 11) über die Betriebszeit t gesehen erhöht werden. Der Vordruck pᵥ kann zum Beispiel in regelmäßigen 0,5-bar- oder 1-bar-Schritten oder in unregelmäßigen Schritten erhöht werden.

Durch die erfindungsgemäße Anordnung des Tanks 3, der Düsen 4 und der Filterpatronen 2, insbesondere durch die blowpipefreie direkte Reinigungslufteinspritzung, kann die Filterpatrone 2 mit einem höheren Druck beaufschlagt werden, insbesondere mit dem Tankinnendruck, der von dem Vordruck pᵥ abhängt, d.h. mit bis zu 7 bar beaufschlagt werden. Dadurch kann die Filterpatrone 2 näher an ihren Ursprungszustand (Δp₀) gebracht werden, so dass die Filterleistung der Filterpatrone 2 erhöht wird.

### Bezugszeichenliste

- 1: Filtersystem
- 2: Filterpatrone
- 3: Tank
- 4: Düse
- 5: Filterwand
- 6: Hohlraum
- 7: Auslassöffnung
- 8: Boden
- 9: Kennlinie einer linearen Vordruckerhöhung
- 10: Kennlinie einer exponentiellen Vordruckerhöhung
- 11: Kennlinie einer stufenweisen Vordruckerhöhung

- F: Filterrichtung
- R: Reinigungsstrom

- Δp: Differenzdruck
- Δp₀: Ursprungsdruck
- Δpₗᵢₘ: Grenzdifferenzdruck

- pᵥ: Vordruck
- pᵥₘᵢₙ: minimaler Vordruck
- pᵥₘₐₓ: maximaler Vordruck

- t: Betriebsdauer/Betriebszeit
- Δt: Zeitintervall zwischen Ausstößen
- t₁ bis t₆: Zeitpunkt eines Reinigungsluftausstoßes

## Patentansprüche

1. Filtersystem (1) zum Reinigen eines Rohgasstroms in einer Fertigungsanlage, mit zumindest einer Filterpatrone (2), die einerseits zum Filtern eines Rohgasstroms in einer Filterrichtung (F) ausgelegt ist und andererseits vorbereitet ist, um durch einen Reinigungsstrom (R) entgegen der Filterrichtung (F) abgereinigt zu werden, und mit einem Tank (3), der ausgelegt ist, um die für den Reinigungsstrom (R) vorgesehene druckbeaufschlagte Reinigungsluft vorzuhalten,
wobei das Filtersystem (1) eine Steuerung enthält, die vorbereitet ist, um in Abhängigkeit eines Differenzdrucks (Δp) zwischen dem Inneren und dem Äußeren der Filterpatrone (2) einen Ausstoß der Reinigungsluft aus dem Tank (3) zu erzwingen, wobei die Steuerung so eingerichtet ist, dass ein Vordruck (pᵥ) des Tanks (3) bis zu einem maximalen Vordruck (pᵥₘₐₓ) umso höher eingestellt wird, desto kleiner ein Zeitintervall (Δt) zwischen aufeinanderfolgenden Ausstößen von Reinigungsluft wird, **dadurch gekennzeichnet, dass** wenigstens eine Düse (4) im Tank (3) so angeordnet ist, dass die Reinigungsluft der Filterpatrone (2) direkt zuführbar ist, wobei eine Anordnung des Tanks (3) und der Filterpatrone (2) so gewählt ist, dass eine blowpipefreie direkte Lufteinspritzung aus dem Tank (3) durch die Düse (4) auf die Filterpatrone (2) oder in die Filterpatrone (2) hinein erzwungen ist, und wobei eine Druckerzeugungsvorrichtung an dem Tank (3) angeschlossen ist, die zum Erzeugen eines Vordrucks (pᵥ) von 3 bis 7 bar im Tank (3) eingerichtet ist.

2. Filtersystem (1) nach Anspruch 1, **dadurch gekennzeichnet, dass** der Tank (3) und/oder die Düse (4) oberhalb der Filterpatrone (2) angeordnet sind/ist.

3. Filtersystem (1) nach Anspruch 1 oder 2, **dadurch gekennzeichnet, dass** das Filtersystem (1) eine einer Anzahl an Filterpatronen (2) entsprechende Anzahl an Düsen (4) aufweist, wobei die Düsen (4) jeweils einer Filterpatrone (2) zugeordnet sind.

4. Filtersystem (1) nach einem der Ansprüche 1 bis 3, **dadurch gekennzeichnet, dass** die Steuerung so eingerichtet ist, dass der Vordruck (pᵥ) des Tanks (3) über eine Betriebsdauer (t) der Filterpatrone (2) gesehen schrittweise oder kontinuierlich verändert wird.

5. Filtersystem (1) nach einem der Ansprüche 1 bis 4, **dadurch gekennzeichnet, dass** ein Filtermaterial der Filterpatrone (2) so gewählt ist, dass wenigstens bis zu 7 bar auf die Filterpatrone (2) einbringbar sind.

6. Verfahren zum Abreinigen einer Filterpatrone (2), eines Filtersystems (1) nach einem der Ansprüche 1 bis 5, wobei Druckluft aus dem Tank direkt in die Filterpatrone (2) eingeleitet wird.

## Claims

1. Filter system (1) for cleaning a raw gas stream in a manufacturing plant,
with at least one filter cartridge (2), which on the one hand is designed to filter a raw gas stream in a filter direction (F) and on the other hand is prepared to be cleaned by a cleaning stream (R) counter to the filter direction (F), and with a tank (3), which is designed to provide the pressurized cleaning air intended for the cleaning stream (R),
wherein the filter system (1) contains a control which is prepared to force an ejection of the cleaning air from the tank (3) depending on a differential pressure (Δp) between the inside and the outside of the filter cartridge (2), the control is set up so that a pre-pressure (pᵥ) of the tank (3) up to a maximum pre-pressure (pᵥₘₐₓ) is set the higher, the smaller a time interval (Δt) between successive ejections of cleaning air becomes, **characterized in that** at least a nozzle (4) is arranged in the tank (3) in such a way that the cleaning air can be supplied directly to the filter cartridge (2), an arrangement of the tank (3) and the filter cartridge (2) being selected so that a blowpipe-free direct air injection out of the tank (3) through the nozzle (4) is forced onto the filter cartridge (2) or into the filter cartridge (2), and a pressure generating device is connected to the tank (3), which is used to generate a pre-pressure (pᵥ) from 3 to 7 bar in the tank (3).

2. Filter system (1) according to claim 1, **characterized in that** the tank (3) and / or the nozzle (4) are / is arranged above the filter cartridge (2).

3. Filter system (1) according to claim 1 or 2, **characterized in that** the filter system (1) has a number of nozzles (4) corresponding to a number of filter cartridges (2), wherein the nozzles (4) each are assigned to a filter cartridge (2).

4. Filter system (1) according to one of claims 1 to 3, **characterized in that** the control is set up so that the pre-pressure (pᵥ) of the tank (3) is changed gradually or continuously over an operating period (t) of the filter cartridge (2).

5. Filter system (1) according to one of claims 1 to 4, **characterized in that** a filter material of the filter cartridge (2) is selected so that at least up to 7 bar can be introduced onto the filter cartridge (2).

6. A method for cleaning a filter cartridge (2) of a filter system (1) according to one of claims 1 to 5, wherein compressed air from the tank is introduced directly into the filter cartridge (2).

## Revendications

1. Système de filtration (1) pour la purification d'un flux de gaz brut dans une installation de fabrication,
avec au moins une cartouche filtrante (2) qui, d'une part, est conçue pour filtrer un flux de gaz brut dans une direction de filtration (F) et, d'autre part, est préparée pour être nettoyée par un flux de nettoyage (R) en sens inverse de la direction de filtration (F), et avec un réservoir (3) qui est conçu pour contenir l'air de nettoyage sous pression prévu pour le flux de nettoyage (R),
dans lequel le système de filtration (1) comporte une commande qui est préparée pour forcer une éjection de l'air de nettoyage à partir du réservoir (3) en fonction d'une pression différentielle (Ap) entre l'intérieur et l'extérieur de la cartouche filtrante (2), dans lequel la commande est agencée de sorte qu'une pression d'alimentation (pᵥ) du réservoir (3) est réglée jusqu'à une pression d'alimentation maximale (pᵥₘₐₓ) d'autant plus élevée qu'un intervalle de temps (Δt) entre des éjections successives d'air de nettoyage devient plus court, **caractérisé en ce qu'**au moins une buse (4) est agencée dans le réservoir (3) de sorte que l'air de nettoyage puisse être amené directement à la cartouche filtrante (2), dans lequel un agencement du réservoir (3) et de la cartouche filtrante (2) est choisi de sorte qu'une injection d'air directe sans tube de soufflage est forcée à partir du réservoir (3) à travers la buse (4) sur la cartouche filtrante (2) ou dans la cartouche filtrante (2), et dans lequel un dispositif de génération de pression est raccordé au réservoir (3), lequel est conçu pour générer une pression d'admission (pᵥ) de 3 à 7 bars dans le réservoir (3).

2. Système de filtration (1) selon la revendication 1, **caractérisé en ce que** le réservoir (3) et/ou la buse (4) sont/est agencé(s) au-dessus de la cartouche filtrante (2).

3. Système de filtration (1) selon la revendication 1 ou 2, **caractérisé en ce que** le système de filtration (1) présente un nombre de buses (4) correspondant à un nombre de cartouches filtrantes (2), dans lequel les buses (4) sont respectivement associées à une cartouche filtrante (2).

4. Système de filtration (1) selon l'une quelconque des revendications 1 à 3, **caractérisé en ce que** la commande est agencée de sorte que la pression d'admission (pᵥ) du réservoir (3), vue sur une durée de fonctionnement (t) de la cartouche filtrante (2), est modifiée de manière progressive ou continue.

5. Système de filtration (1) selon l'une quelconque des revendications 1 à 4, **caractérisé en ce qu'**un matériau filtrant de la cartouche filtrante (2) est choisi de sorte qu'au moins jusqu'à 7 bars peuvent être appliqués à la cartouche filtrante (2).

6. Procédé de nettoyage d'une cartouche filtrante (2), d'un système de filtration (1) selon l'une quelconque des revendications 1 à 5, dans lequel de l'air comprimé provenant du réservoir est introduit directement dans la cartouche filtrante (2).
